Europäisches Patentamt

European Patent Office

Office européen des brevets

(19)

(11) Veröffentlichungsnummer: **0 010 246**
**A1**

(12) **EUROPÄISCHE PATENTANMELDUNG**

(21) Anmeldenummer: **79103842.5**

(22) Anmeldetag: **08.10.79**

(51) Int. Cl.³: **B 32 B 27/00**
**B 29 C 27/00**

(30) Priorität: **12.10.78 DE 2844397**

(43) Veröffentlichungstag der Anmeldung:
**30.04.80 Patentblatt 80/9**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Welz, Martin**
**Kaiserslauterer Strasse 231**
**D-6702 Bad Duerkheim 3(DE)**

(72) Erfinder: **Boenecke, Guenter**
**Osloer Weg 44**
**D-6700 Ludwigshafen(DE)**

(72) Erfinder: **Neuberg, Rainer, Dr.**
**Duerkheimer Strasse 9**
**D-6701 Dannstadt-Schauernheim 2(DE)**

(72) Erfinder: **Seiler, Erhard, Dr.**
**Erpolzheimer Strasse 1**
**D-6700 Ludwigshafen(DE)**

(54) Verbundschichtstoffe aus gefüllten Polyolefinen und einer thermoplastischen Dekorschicht sowie deren Herstellung und Verwendung.

(57) Die Erfindung betrifft Verbundschichtstoffe aus einer mit Füllstoff versehenen Polyolefinschicht und einer thermoplastischen Dekorschicht, ein Verfahren zur Herstellung dieser Verbundstoffe sowie die Verwendung der Verbundstoffe zur Herstellung von Formteilen. Die neuen Verbundschichtstoffe enthalten zwischen der äußeren Schicht aus Polyolefin und der Dekorschicht eine haftvermittelnde Schicht aus einem Mischfaservlies oder -gewebe aus mindestens zwei schmelzbaren Faserarten, von denen jeweils eine mit einer der äußeren Schichten gut haftend verschweißbar ist. Ist die eine äußere Schicht des Verbundkörpers ein Polyolefin, so kann eine Faserart des Mischfaservlieses aus Polypropylen sein, ist die andere äußere Schicht Polyvinylchlorid, so kann eine Faserart aus PVC bestehen. Bevorzugt ist ein Verbundstoff aus Polypropylen und PVC, wobei das Mischfaservlies oder -gewebe aus Polypropylen und PVC-Fasern besteht.

BASF Aktiengesellschaft · O.Z. 0050/033463

Verbundschichtstoffe aus gefüllten Polyolefinen und einer
thermoplastischen Dekorschicht sowie deren Herstellung
und Verwendung

Die Erfindung betrifft Verbundschichtstoffe, bestehend aus (a) einer äußeren tragenden Schicht aus einem mit Füllstoffen versehenen Polyolefin, (c) einer äußeren Dekorschicht aus einem auf (a) an sich schlecht haftendem anderen Thermoplast als Polyolefin und (b) einer dazwischenliegenden haftvermittelnden Schicht aus einem Faservlies oder -gewebe.

Bei derartigen Verbundschichtstoffen ist der gute Verbund zwischen den beiden Deckschichten bzw. der Verbund zwischen Deckschichten und der dazwischenliegenden haftvermittelnden Schicht erforderlich.

Zur Erfüllung dieser Erfordernisse ist es bereits bekannt, mit speziellen Schmelzklebern eine gut haftende Verbindung der beiden äußeren Schichten zu erzeugen. Dabei kann das Problem der mangelnden Wärmestandfestigkeit der Klebverbindung durch zusätzliche Maßnahmen, wie Vernetzung des Haftvermittlers, gelöst werden (vgl. DE-OS 27 53 697). Ein anderer bekannter Weg, schlecht haftender Thermoplastschichten zu verbinden, besteht darin, die tragende Schicht mit einem Faservlies mechanisch zu verankern und diese Schicht dann mittels eines Reaktionsklebers mit der

001024C

Dekorschicht zu verkleben (vgl. DE-OS 26 50 628). Dieses Verfahren ist umständlich und zeitraubend und eignet sich nicht für ein schnelles kontinuierliches Verbinden. Ein Vorteil gegenüber einer direkt mit Reaktionskleber verbundenen Schichtenverbundplatte aus einer tragenden Schicht und einer Dekorschicht ist nicht erkennbar.

Der Erfindung liegt die Aufgabe zugrunde Verbundschichtstoffe zu schaffen, welche aus zwei Schichten bestehen, die nicht miteinander gut haftend verschweißbar sind, und zwar aus (a) einer äußeren tragenden Schicht aus gefülltem Polyolefin und (c) einer äußeren, zur Dekoration dienenden Schicht aus einem anderen Thermoplast als Polyolefin, wobei die beiden Schichten (a) und (c) sehr haftfest durch eine dazwischenliegende haftvermittelnde Schicht (b) miteinander verbunden sein sollen.

Eine weitere Aufgabe bestand darin, die beiden Schichten (a) und (c) in einem kontinuierlich und schnell durchführbaren Verfahren gut haftend zu verbinden.

Diese Aufgaben werden erfindungsgemäß dadurch gelöst, daß die haftvermittelnde Schicht (b) aus einem Mischfaservlies oder -gewebe aus mindestens zwei schmelzbaren Faserarten besteht, von denen jeweils eine mit einer der äußeren Schichten (a) oder (c) gut haftend verschweißbar ist.

Bevorzugt besteht des Polyolefin der äußeren Schicht (a) und eine Faserart des Mischfaservlieses oder -gewebes aus Polypropylen oder die äußere Schicht (c) und eine Faserart des Mischfaservlieses oder -gewebes aus Polyvinylchlorid.

Besonders bevorzugt ist ein Verbundschichtstoff, bei dem das Polyolefin der äußeren Schicht (a) aus Polypropylen,

001024ε

die äußere Schicht (c) aus Polyvinylchlorid und das Mischfaservlies oder -gewebe der Schicht (b) aus Polypropylen-
und Polyvinylchloridfasern besteht.

Eine weitere Lösung der gestellten Aufgaben besteht darin,
daß man zur Herstellung obiger Verbundschichtstoffe die
Schicht (b) nur oberflächlich angeschmolzen aber nicht
durchgeschmolzen wird, bevor oder während die Schichten
(a) und (c) durch Anwendung von Wärme und Druck verbunden
werden.

Nach bevorzugtem Verfahren wird die Schicht (b) zunächst
auf eine der äußeren Schichten (a) oder (c) aufgeschmolzen, und erst danach wird mit der zweiten äußeren
Schicht (c) oder (a) verschweißt.

Die tragende Schicht (a) der Verbundschichtstoffe besteht
aus einem gefüllten Polyolefin und ist 0,5 bis 8, vorzugsweise 1 bis 4 mm dick. Unter Polyolefinen werden
dabei die einschlägig bekannten Homo- und Copolymerisate
des Äthylens und des Propylens mit copolymerisierbaren
olefinisch ungesättigten Verbindungen verstanden. Geeignete Polyolefine sind insbesondere das Polyäthylen
der Dichte 0,890 bis 0,965 g/cm$^3$ (nach DIN 53 479) und
des Schmelzindex von 0,1 bis 20 g/10 min (nach ASTM
D 1238-65 T bei einer Temperatur von 190°C und einem Auflagegewicht von 2,16 kg) sowie das Polypropylen der Dichte
0,80 bis 0,90 g/cm$^3$ und des Schmelzindex von 0,1 bis
20 g/10 min (nach ASTM-D 1238-65 T bei 230°C und 2,16 kg
Belastung) und Mischungen dieser Polyolefine untereinander.

Diese Polyolefine können zur Erhöhung ihrer Schlagzähigkeitseigenschaften gegebenenfalls noch 1 bis 20 Gewichtsprozent an üblich bekannten synthetischen Kautschuken oder
Blockcopolymerisaten aus Styrol und Dienen enthalten. Diese

0010246

Polymerisate sind aus der Polymerchemie wohlbekannt, so daß an dieser Stelle nicht näher darauf eingegangen werden muß. Als besonders geeignetes Polyolefin wird das einschlägig bekannte isotaktische Polypropylen verwendet. Dieses enthält 3 bis 10 Gewichtsprozent eines Polypropylens, das in siedenden und anschließend auf Zimmertemperatur wieder abgekühlten Xylol, bei einem Gewichtsverhältnis von Polypropylen zu Xylol wie 5:95, löslich ist.

Die Polyolefine sind mit 10 bis 60, bevorzugt 20 bis 50 Gewichtsprozent, bezogen auf das Gewicht des gefüllten Polyolefins, eines üblichen festen und inerten Füllstoffes gefüllt. Für die Verwendung der Polyolefinschicht geeignete Füllstoffe sind beispielsweise Glasfasern, Glasmatten, Glaskugeln, Talkum, Kreide, Glimmer sowie feinteiliges Holz. Als Holzteilchen kommen alle marktgängigen Typen in einem Teilchenbereich von 10 bis 5 000 µm Länge und 10 bis 2 000 µm Dicke in Betracht. Die Holzmehle können sowohl in Pulverform als auch kompaktiert eingesetzt sein. Zusätzlich zu den obigen Füllstoffen können die Polyolefinmassen noch einschlägig bekannte Flammschutzmittel, Mittel zur Verbesserung der Schlagfestigkeit wie Polyäthylen niederer Dichte, Stabilisatoren oder Abfallstoffe (Regenerate) enthalten.

Die Dekorschicht besteht aus einem anderen thermoplastischen Polymerisat als ein Polyolefin und kann aus einem Polyvinylchlorid (Hart-PVC, Weich-PVC, geschäumt oder kompakt), einem durch Zusatz von Styrolcopolymeren wie Styrol-Acrylnitril-Copolymerisat, Acrylnitril-Butadien-Styrol-Copolymerisat, Acrylnitril-Styrol-Acrylester-Copolymerisat oder Pfropfkautschuken zur Schlagzähmodifizierung oder durch Zusatz von gesättigten Polyestern zur Verbesserung der Verarbeitbarkeit modifizierten PVC oder aus chloriertem Polyäthylen bestehen. Vorzugsweise wird eine weichgemachte PVC-Folie verwendet, die geschäumt sein kann, um einen weicheren Griff und Polstereffekt zu erzeugen. Solche Folien sind in vielen Farben und Mustern auf dem Markt erhältlich.

Die Dicke dieser Folien der Schicht (c) kann bei kompakten Aufbau zwischen 0,05 und 2 mm, bei geschäumten Folien zwischen 0,5 und 5 mm liegen.

Unter Polyvinylchlorid wird das aus der Polymerchemie bekannte Polymerisationsprodukt des Vinylchlorids verstanden, das einen thermoplastischen Chlorgehalt von 56 bis 57 Gewichtsprozent und einen Erweichungspunkt von 75 bis 80°C aufweist. Der K-Wert des Polyvinylchlorid liegt vorzugsweise bei 70 bis 90 (gemessen nach DIN 53 726). Ein geschäumtes Polyvinylchlorid ist ein künstlich hergestellter leichter Schaumstoff mit zelliger Struktur. Für die erfindungsgemäßen Verbundstoffe sind PVC-Weichschäume mit geschlossenzelligen Schäumen und mit Dichten von 0,6 bis 1,3 $g/cm^3$ besonders geeignet. Das als Dekorschicht (c) verwendete Polyvinylchlorid ist bevorzugt ein sog. Weich-PVC. Es enthält dementsprechend einen für PVC gebräuchlichen Weichmacher in Mengen von 15 bis 40, bevorzugt 20 bis 35 Gewichtsprozent, bezogen auf das Gewicht des Weich-PVC. Geeignete Weichmacher sind beispielsweise Trikresylphosphat, Phthalsäureester oder Ester aliphatischer Dicarbonsäuren. Das Weich-PVC kann außerdem noch die einschlägig üblichen Stabilisatoren und Pigmente enthalten.

Die zwischen den Deckschichten (a) und (c) liegende haftvermittelnde Schicht (b) besteht aus einem Faservlies oder Fasergewebe. Unter Faservlies werden dabei nichtgewebte bzw. nichtgewirkte Flächengebilde verstanden, die aus Fasermaterialien bestehen. Diese Faseren, deren Länge sich nach dem Herstellverfahren richtet, werden in Vliesbil-

001024€

dungsmaschinen trocken oder naß zu einem Vlies verfilzt. Vliese der verwendeten Art sind an sich bekannt und beispielsweise in der Literaturstelle Textilpraxis 1968, Heft 3 beschrieben. Die erfindungsgemäß zu verwendenden Mischfaservliese bestehen aus verschiedenen Fasermaterialien.

Zur Verschweißung mit der Trägerschicht (a) aus gefülltem Polyolefin sind ganz oder vorwiegend aus Polyolefinen aufgebaute Fasern einsetzbar. Solche Fasern sind auf dem Markt erhältlich. Bei Verwendung einer Trägerschicht aus gefülltem Polypropylen sind entsprechend Polypropylen--Fasern besonders gut geeignet.

Zur Verschweißung mit der Dekorschicht, die beispielsweise aus Weich-PVC besteht eignen sich als gut haftende Fasermaterialien alle ganz oder teilweise aus Polyvinylchlorid (PVC) oder Polyvinylidenchlorid (PVDC) aufgebauten Fasern sowie Fasern aus Copolymeren und Mischungen aus PVC und PVDC. Solche Fasern sind auf dem Markt erhältlich. Fasern aus Copolymerisaten von Acrylnitril mit Vinylchlorid oder Vinylidenchlorid, die als flammfeste Fasern im Handel angeboten werden, sind ebenfalls geeignet. Auch Fasern aus Mischungen aus PVC mit Polyester (PVC-Anteil 50 Gewichtsprozent) sind mit den obengenannten Dekorschichten gut haftend verschweißbar. Für das bevorzugte als Dekorschicht eingesetzte weichgemachte PVC eignen sich reine PVC-Fasern besonders gut.

Die Eigenschaften und textiltechnischen Daten der im Mischvlies oder -gewebe eingesetzten Fasern können in einem weiten Bereich variiert werden. Es können Fasern mit einem Titer zwischen 0,1 und 200 dtex, vorwiegend 0,5 und 25 dtex eingesetzt werden. Vielfach sind auch Bikomponentenfasern vorteilhaft einsetzbar.

Das Mischungsverhältnis der Polyolefin- und PVC-Fasern ist den Erfordernissen anzupassen. Es liegt im Bereich von 5:95 bis 95:5 vorzugsweise 30:70 bis 70:30.

Die Erweichungspunkte der schmelzbaren Fasertypen können in einem weiten Bereich voneinander abweichen, ohne daß die Brauchbarkeit des Mischvlieses beeinträchtigt wird. Es ist gerade ein Vorteil des erfindungsgemäßen Verfahrens, daß auch Schichten mit weit auseinanderliegenden Schmelz- und/oder Erweichungspunkten gut haftend verschweißbar sind, da das Mischfaservlies eine gute Isolierwirkung besitzt.

Außer den beiden schweißbaren Fasertypen können noch andere Fasern zugesetzt werden, um bestimmte Eigenschaften zu erzielen z.B. hochfeste, wärmebeständige Fasern zur Aufnahme von Kräften bei der Verarbeitung oder beim Gebrauch; leitfähige Fasern für induktive Erwärmung; gekräuselte Fasern für einen erhöhten Polstereffekt der Dekorschicht.

Das Vlies wird nach den üblichen Verfahren durch Mischen, Krempeln, Kreuzlegen mit anschließender mechanischer und/oder chemischer Verfestigung hergestellt. Die Eigenschaften können bei der Vernadelung positiv beeinflußt werden. Es kann durch Binder oder thermische Behandlung in der üblichen Art zusätzlich verfestigt werden.

Gewebe aus verschiedenen Faserarten können entweder aus Mischfasergarnen oder aus verschiedenen Garnen in Kette und Schuß hergestellt sein. Durch die Wahl des Garn-Titers und der Bindeart kann das Gewebe den Anforderungen (z.B. Verformungsverhalten) angepaßt werden.

Die Flächengewichte der Mischvliese bzw. -gewebe liegen zwischen 15 und 100 $g/m^2$, bevorzugt zwischen 20 und 50 $g/m^2$.

001024€

Das Vlies bzw. das Gewebe wird in der üblichen Weise kontinuierlich auf eine der beiden Schichten durch Anwendung von Druck und Wärme aufkaschiert bzw. bei der Herstellung der Schicht mit eingepreßt. In einem weiteren Arbeitsgang wird dann die zweite Schicht auf das Vlies aufgeschweißt, wobei darauf zu achten ist, daß das Vlies nicht vollkommen zusammenschmilzt, da dadurch die Eigenschaften verschlechtert werden können. Von Vorteil ist es dabei, wenn das Vlies zuerst auf die Dekorschicht aufgeschweißt bzw. bei der Herstellung eingebettet wird, da dieser Verbund durch die Möglichkeit ihn aufzuwickeln noch gut handhabbar ist.

Der im Vergleich zu Reaktionsklebern sehr schnelle Verschweißprozeß gestattet auch ein voll kontinuierliches Herstellen des Verbundes.

Hierbei wird zwischen die schmelzeflüssige heiße Trägerschicht aus gefülltem Polyolefin und die je nach Wärmestandfestigkeit auf 100-150°C aufgewärmte Dekorschicht das Fasermischvlies, gegebenenfalls auf 100-150°C aufgewärmt, eingebracht und anschließend unter Druck verschweißt und abgekühlt.

Das fertige Halbzeug kann nach verschiedenen Verfahren wie Vakuum- oder Druckluftformen, Abkanten, Biegen, Pressen nach entsprechendem Aufheizen zu Formkörpern verarbeitet werden. Bei einer Variation dieser Verfahren wird der fertige Verbund erst beim Verformen unter Druck aus Träger- und Dekorschicht hergestellt. Dieses Verfahren hat vor allem den Vorteil, daß Träger und Dekor auf verschiedene Temperaturen aufgeheizt werden können.

Es ist ein Vorteil des erfindungsgemäßen Verfahrens, daß durch die Verfilzung der 2 Fasertypen des Vlieses bzw. durch den Gewebeverbund die Kräfte von der auf der Träger- schicht aufgeschweißten Faser auf die Faser, die auf der Dekorschicht aufgeschweißt ist, übertragen werden. Die Haftung der Fasern an der Träger- und Dekorschicht erfolgt vorwiegend durch Verschweißung und nur im untergeordneten Maß, durch mechanische Verankerung.

Beispiel 1

Polypropylenfasern mit einem Titer von 5 dtex und einer Länge von 50 mm werden mit PVC-Fasern vom Typ Thermovyl der Fa. Rhodiaceta mit einem Titer von 6 dtex und 70 mm Länge in einem Gewichtsverhältnis 60:40 zu einem Vlies von 35 g/m² verarbeitet.

Dieses Vlies wird auf eine Folie aus geschäumten Weich-PVC von 2,0 mm Dicke aufgeschweißt, indem Vlies und Rückseite der PVC-Folie auf 130°C aufgeheizt und durch kalte Walzen gepreßt und durch Abkühlen fixiert werden.

Das Trägermaterial - ein mit 40 Gewichtsprozent feinem Holzmehl gefülltes Polypropylen - wird extrudiert und durch ein Glättwerk zu 2,5 mm dicken Platten gepreßt. Vor dem Einlaufen in das Glättwerk wird das Kaschiermittel aus PVC-Folie und Mischvlies dem Trägermaterial zugeführt, wobei die Wärme des schmelzflüssigen, 190° heißen Trägers ausreicht, um die Polypropylenfasern im Vlies anzuschmelzen, die dann im Walzspalt unter Druck mit dem Träger aus holzmehlgefülltem Polypropylen verschweißen. Die Haftfestigkeit der Folie auf dem Träger, gemessen im Schältest beträgt 3,1 N/mm. Die Gesamtdicke des kaschierten Blattmaterials beträgt - bedingt durch die geringfügige Zusammenpressung, (Stauchung) der Schaumfolie 4,4 mm.

Beispiel 2

Polypropylenfasern mit einem Titer von 5 dtex und einer Länge von 60 mm werden mit Fasern aus einem Gemisch und 70 Teilen PVC und 30 Teilen eines thermoplastichen Polyesters auf Basis Polyneopentylglykolterephthalat mit einem Titer von 7 dtex und 70 mm Länge im Gewichtsverhältnis 40:60 zu einem Vlies von 40 g/m$^2$ verarbeitet. Dieses Vlies wird kontinuirlich auf eine Weich-PVC-Folie durch Aufheizen von Folie und Vlies, Pressen zwischen zwei Walzen und anschließendem Abkühlen des Verbundes kaschiert.

Das Trägermaterial - ein mit 30 Gewichtsprozent Kreide gefülltes Polypropylen - wird extrudiert und durch ein Glättwerk zu 3,5 mm dicken Platten gepreßt. Vor dem Einlaufen in das Glättwerk wird das Kaschiermaterial dem Trägermaterial zugeführt, wobei die Wärme des schmelzflüssigen Trägers ausreicht, um die PP-Fasern im Vlies anzuschmelzen, die dann im Walzspalt unter Druck mit dem gefüllten Polypropylen verschweißen.

Beispiel 3

Ein Mischfaservlies aus 40 % Polypropylenfasern mit einem Titer von 4,0 dtex, 40 % Fasern aus einem Copolymeren von VC und AN mit 60 % VC-Anteil mit einem Titer von 5 dtex und 20 % Polyamid 6,6-Fasern mit einem Titer von 8 dtex, die zur Erhöhung der Stabilität zugesetzt wurden, wird in der üblichen Weise gefertigt und anschließend durch 10 Stiche pro cm$^2$ vernadelt. Es wird durch Druck und Wärme mit einer PVC-Schaumfolie verschweißt.

Ein mit 35 Gewichtsprozent Holzmehl gefülltes Polypropylen wird zu 3,0 mm dicken Platten extrudiert. Beim Glätten wird die Kaschierfolie mit dem Vlies aufgedrückt und gleichzeitig mit dem Trägermaterial verschweißt. Aus dem fertigen Halbzeug wurden Zuschnitte ausgestanzt, durch IR-Strahler auf Verformungstemperatur aufgeheizt und durch Druckluft in eine Form gepreßt.

BASF Aktiengesellschaft — 1 — O.Z. 0050/033463

0010246

Patentansprüche

1. Verbundschichtstoffe, bestehend aus (a) einer äußeren tragenden Schicht aus einem mit Füllstoffen versehenen Polyolefin, (c) einer äußeren Dekorschicht aus einem auf (a) an sich schlecht haftenden anderem Thermoplast als Polyolefin und (b) einer dazwischenliegenden haftvermittelnden Schicht aus einem Faservlies oder -gewebe, dadurch gekennzeichnet, daß die haftvermittelnde Schicht (b) aus einem Mischfaservlies oder -gewebe aus mindestens zwei schmelzbaren Faserarten besteht, von denen jeweils eine mit einer der äußeren Schichten (a) oder (c) gut haftend verschweißbar ist.

2. Verbundschichtstoffe nach Anspruch 1, dadurch gekennzeichnet, daß das Polyolefin der äußeren Schicht (a) und eine Faserart des Mischfaservlieses oder -gewebes aus Polypropylen besteht.

3. Verbundschichtstoffe nach Anspruch 1, dadurch gekennzeichnet, daß die äußere Schicht (c) und eine Faserart des Mischfaservlieses oder -gewebes aus Polyvinylchlorid besteht.

4. Verbundschichtstoff nach Anspruch 1, dadurch gekennzeichnet, daß das Polyolefin der äußeren Schicht (a) aus Polypropylen, die äußere Schicht (c) aus Polyvinylchlorid und das Mischfaservlies oder -gewebe der Schicht (b) aus Polypropylen- und Polyvinylchloridfasern besteht.

5. Verfahren zur Herstellung der Verbundschichtstoffe nach Anspruch 1, dadurch gekennzeichnet, daß die

0010246

Schicht (b) nur oberflächlich angeschmolzen aber nicht durchgeschmolzen wird, bevor oder während die Schichten (a) und (c) durch Anwendung von Wärme und Druck verbunden werden.

6. Verfahren zur Herstellung der Verbundschichtstoffe nach Anspruch 1, dadurch gekennzeichnet, daß die Schicht (b) zunächst auf eine der äußeren Schichten (a) oder (c) aufgeschmolzen wird, und erst danach mit der zweiten äußeren Schicht (c) oder (a) verschweißt wird.

7. Verwendung der Verbundschichtstoffe nach Anspruch 1, für die Herstellung von Formteilen.

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | NL - A - 70 07030 (WAVIN) | 1 |
| | * Seite 2, Zeilen 12-36; Seiten 3,4; Seite 5, Zeilen 1-20; Seite 8; Ansprüche 1,2,5; Figuren 1-3 * | |
| | -- | |
| A | FR - A - 1 092 502 (RODRIQUES) | |
| A | FR - A - 1 549 099 (POLYMER PROCESSING RESEARCH) | |
| | ---- | |

### KLASSIFIKATION DER ANMELDUNG (Int.Cl. 3)

B 32 B 27/00
B 29 C 27/00

### RECHERCHIERTE SACHGEBIETE (Int. Cl. 3)

B 32 B

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-01-1980 | VAN THIELEN |

EPA form 1503.1   06.78